# EUROPÄISCHE PATENTSCHRIFT

(11) **EP 2 870 726 B1**
(45) Veröffentlichungstag und Bekanntmachung des Hinweises auf die Patenterteilung: **26.04.2017**
(21) Anmeldenummer: 13745012.8
(22) Anmeldetag: 24.07.2013
(51) Int. Cl.: H04L 12/24, B61L 15/00, H04L 12/40

(54) **VERFAHREN ZUR INBETRIEBNAHME ZUMINDEST EINES FUNKTIONSGERÄTS UND SCHIENENFAHRZEUGSVERBAND**
METHOD FOR STARTING UP AT LEAST ONE FUNCTIONAL DEVICE, AND RAIL VEHICLE SYSTEM
PROCÉDÉ DE MISE EN SERVICE D'AU MOINS UN APPAREIL FONCTIONNEL ET RAME FERROVIAIRE

(30) Priorität: 23.08.2012 DE 102012214950; 23.01.2013 DE 102013201031
(43) Veröffentlichungstag der Anmeldung: 13.05.2015
(73) Patentinhaber: Siemens Aktiengesellschaft, 80333 München (DE)
(72) Erfinder: MIEBS, Jürgen, 91330 Eggolsheim (DE)
(86) Internationale Anmeldenummer: PCT/EP2013/065591
(87) Internationale Veröffentlichungsnummer: WO 2014/029581

(56) Entgegenhaltungen:
- EP-A1- 2 266 860
- EP-A2- 1 306 283
- US-B1- 7 080 078

## Beschreibung

Die Erfindung betrifft ein Verfahren zur Inbetriebnahme zumindest eines Funktionsgeräts in einem ersten Schienenfahrzeug eines aus mehreren, jeweils als Triebzug ausgebildeten Schienenfahrzeugen bestehenden Fahrzeugsverbands, wobei das Funktionsgerät auf der Basis wenigstens eines Satzes von Funktionsdaten betreibbar ist.

Im Eisenbahntransport von Passagieren werden neben der klassischen Zugkonfiguration mit Reisezugwagen, die von einer Lokomotive geführt werden, Fahrzeugsverbände eingesetzt, die durch die Kupplung von selbst angetriebenen Schienenfahrzeugen gebildet werden. Neben dem Antrieb verfügt jedes Schienenfahrzeug eines Fahrzeugsverbands über eine eigene Leittechnik, die sowohl für den Einzelbetrieb als auch für den Verbandbetrieb mit weiteren Schienenfahrzeugen geeignet sein muss. Sind die Schienenfahrzeuge in einem Fahrzeugverband identisch ausgebildet, kann ein Betrieb des Fahrzeugverbands als eine Zugeinheit von einem Führerraum aus ohne aufwendige Anpassung erfolgen, da die Systeme in den verschiedenen Schienenfahrzeugen konstruktiv und funktional aufeinander abgestimmt sind.

Es tritt jedoch oft der Fall ein, dass ein Schienenfahrzeug eines bestimmten Typs mit einem weiteren Schienenfahrzeug eines zwar kompatiblen Typs gekuppelt wird, das sich jedoch konstruktiv und/oder funktional vom ersten Schienenfahrzeug unterscheidet. Dies kommt insbesondere dadurch zustande, dass ein Bahnbetreiber Schienenfahrzeuge auftragsgemäß in der Form von einzelnen Chargen von einem Fahrzeughersteller abruft. So werden Schienenfahrzeuge einer älteren Charge mit Schienenfahrzeugen einer neueren Charge gekuppelt, die über mehr oder geänderte Funktionalitäten als die Schienenfahrzeuge der älteren Charge verfügen.

Die Kupplung lässt sich dadurch realisieren, dass die Schienenfahrzeuge der älteren Charge softwaretechnisch an die neuen Funktionalitäten der Schienenfahrzeuge der neueren Charge angepasst werden. Außerdem müssen die Schienenfahrzeuge der neueren Charge derart konfiguriert sein, dass sie zum Betrieb mit den älteren Schienenfahrzeugen geeignet sind. Die Anpassung der älteren Schienenfahrzeuge fordert oft eine erneute Zulassung, wodurch ein Aufwand nicht nur für den Fahrzeughersteller sondern auch für den Bahnbetreiber entsteht.

Mit einem fachmännischen Begriff ausgedrückt müssen die Schienenfahrzeuge der älteren Charge neu projektiert werden. Diese Projektierung umfasst eine neue Programmierung vom Funktionsgerät, von seiner Kommunikation mit einer Steuereinheit und von dieser Steuereinheit selber. Dabei müssen zumindest zwei Gruppen von Fachleuten eingebunden werden, die auf die leittechnische Ebene des Schienenfahrzeugs einerseits und auf die Entwicklung des Funktionsgeräts andererseits spezialisiert sind. Dieser Vorgänge sind aufgrund der notwendigen Koordinierung zwischen den Fachleuten besonders zeitaufwendig.

EP 2 266 860 A1 beschreibt eine Ermittlung der Zusammensetzung eines Triebzugs, welcher sich aus mehreren Einzelwagen oder einer Gruppe von Wagen, die eine Einheit bilden, zusammensetzt. US 7,080,078 B1 beschreibt eine Erzeugung von Anzeigen innerhalb einer Rechnerumgebung, welche über ein Netz verbundene Clients und Dienste umfasst. Dabei ist es Ziel, einen Netzwerkzugang für ein breites Spektrum von Endgeräten mit unterschiedlichen Rechen- und Speicherkapazitäten zu vereinfachen.

Der Erfindung liegt die Aufgabe zugrunde ein Verfahren zur Inbetriebnahme zumindest eines Funktionsgeräts in einem ersten Schienenfahrzeug eines aus mehreren, jeweils als Triebzug ausgebildeten Schienenfahrzeugen bestehenden Fahrzeugsverbands bereit zu stellen, durch welches ein Betreiben eines Fahrzeugsverbands bestehend aus Schienenfahrzeugen unterschiedlicher Konfigurationen mit einem geringen Anpassungsaufwand erreicht werden kann.

Hierzu wird vorgeschlagen, dass in jedem Schienenfahrzeug jeweils zumindest ein Satz von Funktionsdaten zum Betreiben des Funktionsgeräts gespeichert ist, die jeweils für die konstruktive und/oder funktionale Konfiguration des entsprechenden Schienenfahrzeugs spezifisch sind, im ersten Schienenfahrzeug zumindest der in einem weiteren Schienenfahrzeug des Fahrzeugverbands gespeicherte Satz aus dem weiteren Schienenfahrzeug geladen wird, und das Funktionsgerät zumindest auf der Basis des geladenen Satzes von Funktionsdaten betrieben wird. Hierzu kann bei der Bildung des Fahrzeugsverbands mit mehreren Schienenfahrzeugen erreicht werden, dass dem Funktionsgerät mehrere Sätze von Funktionsdaten zur Verfügung gestellt werden, die jeweils für die konstruktive und/oder funktionale Konfiguration des entsprechenden Schienenfahrzeugs spezifisch sind. Wenn der Fahrzeugsverband aus Schienenfahrzeugen mit unterschiedlicher Konfiguration gebildet wird, z.B. wenn ein mit dem ersten Schienenfahrzeug gekoppeltes, zweites Schienenfahrzeug konstruktiv und/oder funktional über Funktionalitäten verfügt, die im ersten Schienenfahrzeug nicht vorhanden bzw. anders ausgelegt sind, enthalten die im zweiten Schienenfahrzeug hinterlegten Funktionsdaten zweckmäßigerweise notwendige Informationen für einen Betrieb des Funktionsgeräts im ersten Schienenfahrzeug mit Berücksichtigung der genannten fahrzeugspezifischen Funktionalitäten des zweiten Schienenfahrzeugs. Durch das Laden eines Satzes von Funktionsdaten des zweiten Schienenfahrzeugs im Funktionsgerät des ersten Schienenfahrzeugs kann demnach das Funktionsgerät automatisch an die konstruktive und/oder funktionale Konfiguration des zweiten Schienenfahrzeugs angepasst werden, ohne dass eine erneute Projektierung des Funktionsgeräts, der Kommunikation dieses mit der Schienenfahrzeugsleittechnik und dieser Leittechnik im ersten Schienenfahrzeug notwendig ist.

Die Funktionsdaten sind grundsätzlich statische Daten, die während eines Betriebs des jeweiligen Schienenfahrzeugs nicht veränderbar sind. Sie können insbesondere festgelegte Parameter und/oder Vorlagen zur Ausführung einer Applikation des Funktionsgeräts enthalten. Sie werden vorzugsweise vor der ersten Inbetriebnahme des Schienenfahrzeugs erstellt und in eine Speichereinheit an Bord des Schienenfahrzeugs hinterlegt. Sie können zwischen zwei Betriebseinsätzen aktualisiert werden, wobei die aktualisierten Funktionsdaten lediglich in die Speichereinheit des jeweiligen Schienenfahrzeugs hinterlegt werden, ohne dass eine Anpassung des Funktionsgeräts notwendig ist. Der Betrieb des Funktionsgeräts erfolgt auf der Basis der Funktionsdaten, indem diese insbesondere von einem Betriebssystem des Funktionsgeräts in eine bestehende Softwarestruktur eingebunden werden, wobei diese Softwarestruktur weitestgehend frei von Bezügen auf die jeweilige konstruktive und/oder funktionale Konfiguration der Schienenfahrzeuge des Fahrzeugsverbands ist. Diese Konfigurationen werden vorteilhafterweise mit dieser Einbindung der Funktionsdaten berücksichtigt. Die im Funktionsgerät vorhandene Softwarestruktur wird demnach im Wesentlichen von einer abstrakten Struktur bzw. einer Struktur mit abstrakten Objekten gebildet, die mittels der Funktionsdaten aus den verschiedenen Schienenfahrzeugen "instanziiert" werden. Im Vergleich zu einer herkömmlichen Struktur, die als größter gemeinsamer Nenner für alle möglichen Zugverbandskonfigurationen ausgebildet sein muss und demnach einen hohen Projektierungsaufwand erfordert, ist die vorgeschlagene Struktur durch einen geeigneten Abstraktionsgrad an diese Zugverbandskonfigurationen angepasst. Durch das Instanziieren abstrakter Objekte lassen sich außerdem Projektierungsfehler einfacher identifizieren.

Unter einem "Satz" von Funktionsdaten kann in diesem Zusammenhang insbesondere eine die Funktionsdaten enthaltende Datei oder ein Bündel solcher Dateien verstanden werden.

Unter einer "Inbetriebnahme" des Funktionsgeräts soll insbesondere ein Vorgang verstanden werden, der nach der mechanischen Bildung des Fahrzeugsverbands und vor dem Einsatzbeginn des Fahrzeugsverbands als Zugeinheit stattfindet. Die Inbetriebnahme erfolgt vorzugsweise in Verbindung mit der sogenannten "Zugtaufe", bei welcher eine für den Betriebseinsatz erforderliche Verbandskonfiguration der Schienenfahrzeuge eingestellt wird. Bei diesem Einstellvorgang werden bestimmte Parameter und Zustände von Einrichtungen der Leittechnik der Schienenfahrzeuge derart eingestellt, dass Erfordernisse für den Betrieb des Fahrzeugsverbands als Zugeinheit erfüllt werden.

Gemäß einer bevorzugten Ausführungsform der Erfindung wird im ersten Schienenfahrzeug vor dem Laden eines gespeicherten Satzes von Funktionsdaten ermittelt, ob ein Laden des Satzes erforderlich ist, und das Laden bei vorliegendem Erfordernis erfolgt, wodurch ein unnötiger Datenverkehr vorteilhaft vermieden werden kann. Hierbei werden vorzugsweise eine Version von Funktionsdaten, die im Funktionsgerät bereits hinterlegt sind, und eine Version entsprechender Funktionsdaten, die zur Ladung in einem Schienenfahrzeug zur Verfügung steht, miteinander verglichen.

Außerdem wird vorgeschlagen, dass zumindest ein Satz von Funktionsdaten zur Bildung von statischen Applikationselementen dient, die dem Funktionsgerät zur Ausführung einer Applikation zur Verfügung stehen, dass während des Betriebs des Fahrzeugsverbands dynamische Daten dem Funktionsgerät übermittelt werden, und dass die Ausführung der Applikation auf einem Zusammenwirken der statischen Applikationselemente und der dynamischen Daten basiert. Die für die Bildung der statischen Applikationselemente notwendigen Informationen sind hiermit vorteilhaft in den im jeweiligen Schienenfahrzeug zentral hinterlegten Funktionsdaten enthalten. Diese statischen Applikationselemente, die insbesondere auf die jeweilige konstruktive und/oder funktionale Konfiguration der verschiedenen Schienenfahrzeuge bezogen sind, welche per se während des Betriebs des Fahrzeugverbands invariabel ist, können auf der Basis der in jedem Schienenfahrzeug zentral hinterlegten Funktionsdaten erzeugt werden. Die Entwicklung dieser auf die jeweilige konstruktive und/oder funktionale Konfiguration der Schienenfahrzeuge bezogenen Applikationselemente kann demnach auf die Herstellung und Bereitstellung der zentral hinterlegten Funktionsdaten verlagert werden und betrifft nicht mehr das Funktionsgerät. Dadurch können Fahrzeuge unterschiedlicher Typen beispielsweise jeweils verschiedene Diagnosevorgänge oder Anweisungstexten haben, wobei eine vorgenommene Änderung für einen Fahrzeugtyp keine entsprechende Änderung für die anderen Fahrzeugtypen in einer Fahrzeugflotte erfordert.

Im Gegensatz zu den Funktionsdaten und zu den aus diesen gebildeten Applikationselementen sind die dynamischen Daten zweckmäßigerweise auf den Betrieb des Fahrzeugsverbands bezogen. Sie sind vorzugweise auf den Status oder den Zustand von Komponenten des gesamten Fahrzeugsverbands bezogen, welcher sich während des Betriebs ändern kann. Beispiele für einen derartigen Status können eine Betriebstauglichkeit, eine einwandfreier Betrieb, eine Störung, ein Ausfall usw. sein. Sie können sich ferner auf veränderliche Fahrparameter beziehen, wie z.B. eine Fahrzeugsgeschwindigkeit, eine Beschleunigung, eine Leistung, eine Position usw. Das Einbinden der dynamischen Daten ist insbesondere unabhängig von einer jeweiligen Signalschnittstelle der verschiedenen Schienenfahrzeuge. Die Änderung einer Signalschnittstelle in einem Schienenfahrzeugtyp erfordert vorteilhafterweise keine Anpassung bei den Fahrzeugen anderer Schienenfahrzeugtypen.

Die Funktionsdaten können in den jeweiligen Schienenfahrzeugen in verschiedenen Formaten hinterlegt sein, die jeweils auf die Natur des entsprechenden Applikationselements bezogen sind. So können z.B. Funktionsdaten Textdateien, Bilddateien oder ausführbare Dateien sein, die von einem Betriebsystem des Funktionsgeräts zur Ausführung der Applikation direkt eingebunden werden.

Es kann jedoch ein vorteilhafter Unabhängigkeitsgrad von einem Betriebssystem des Funktionsgeräts erreicht werden, wenn im ersten Schienenfahrzeug vor dem Betreiben des Funktionsgeräts die Funktionsdaten zur Erzeugung der Applikationselemente kompiliert werden. Die Funktionsdaten können hiermit zentral im jeweiligen Schienenfahrzeug in einem Format hinterlegt sein, welches für ein Laden im ersten Schienenfahrzeug vorteilhaft ist und insbesondere für die unterschiedlichen Applikationselemente gleich ist. Nach dem Laden werden die Funktionsdaten bei der Kompilierung zweckmäßigerweise in die Form von Dateien unterschiedlicher Formate umgewandelt, welche dann von einem Betriebsystem des Funktionsgeräts zur Ausführung der Applikation eingebunden werden können. Es kann vorteilhaft eine Aktualisierung bzw. eine vollständige Änderung des Betriebssystems des Funktionsgeräts erfolgen, ohne dass erhebliche Anpassungen der Funktionsdaten notwendig sind.

In diesem Zusammenhang wird vorgeschlagen, dass die Funktionsdaten in der Form von Textdateien gespeichert sind und geladen werden. Hierdurch können die Funktionsdaten in einer speicherplatzsparenden Form hinterlegt und in das erste Schienenfahrzeug geladen werden. Um eine besonders geringe Abhängigkeit vom Betriebssystem des Funktionsgeräts zu erreichen wird vorgeschlagen, dass die Textdateien für den plattform- und implementationsunabhängigen Austausch von Daten zwischen Computersystemen geeignet sind. Insbesondere können die Textdateien als XML-Dateien ("Extensible Markup Language" oder "erweiterbare Auszeichnungssprache") ausgebildet sein.

In einer besonders vorteilhaften Ausbildung der Erfindung weist das Funktionsgerät eine Anzeigevorrichtung auf, wobei die Applikationselemente zumindest für einen Betrieb der Anzeigevorrichtung verfügbaren Anzeigeelementen entsprechen und eine dynamische Anzeige auf der Basis der verfügbaren Anzeigeelemente und der dynamischen Daten erfolgt. Beispiele für Anzeigeelemente sind eine Textinformation, ein Hintergrundsbild, ein Bildsymbol einer Fahrzeugskomponente usw. Diese Anzeigeelemente, die auf der Basis der in den Schienenfahrzeugen zentral hinterlegten Funktionsdaten gebildet werden, können vorteilhaft bei der Projektierung der Fahrzeugsleittechnik entworfen werden, wobei eine Einbindung von weiteren Fachleuten auf der Ebene der Funktionsgerätsentwicklung nicht notwendig ist. Es kann insbesondere schnell und einfach eine Änderung eines Anzeigeelements durch eine entsprechende Anpassung der entsprechenden Funktionsdaten erfolgen.

Gemäß einer bevorzugten Ausbildung der Erfindung dient zumindest ein Satz von Funktionsdaten zur Bildung einer Verknüpfung zwischen dynamischen Daten, die dem Funktionsgerät übermittelbar sind, und zumindest eine Handlung mit einem Applikationselement, welche für diese dynamischen Daten auszuführen ist. Hierdurch kann die Projektierung einer Signalübertragung zwischen einer Einheit, die die dynamischen Daten erzeugt, und dem Funktionsgerät, ebenfalls auf der Ebene von zentral hinterlegten Funktionsdaten erfolgen. Die notwendigen Verknüpfungen werden hierbei vorzugsweise nicht zusammen mit den dynamischen Daten übertragen, sondern stehen vorteilhafterweise in der Form von Funktionsdaten für einen Abruf durch das Funktionsgerät zur Verfügung.

Weist das Funktionsgerät eine Anzeigevorrichtung auf, wobei die Applikationselemente zumindest für einen Betrieb der Anzeigevorrichtung verfügbaren Anzeigeelementen entsprechen, wird in diesem Zusammenhang vorgeschlagen, dass auf der Basis der Funktionsdaten eine Verknüpfung zwischen dynamischen Daten und einer der folgenden Handlungen herstellbar ist: Einblenden oder Ausblenden eines Bildsymbols, Anzeigen eines Bildsymbols in einer bestimmten Farbe, zur Verfügung Stellen einer einblendbaren Textinformation.

In einer weiteren Ausführung der Erfindung weist das Funktionsgerät im ersten Schienenfahrzeug eine Eingabeeinrichtung zur Eingabe von Steuerbefehlen auf, wobei zumindest ein Satz von Funktionsdaten eines der Schienenfahrzeuge zur Bildung zumindest einer ausführbaren Routine dient, die dazu vorgesehen ist, auf der Basis des eingegebenen Steuerbefehls die Ausführung einer Funktion in diesem Schienenfahrzeug auszulösen. Es können hiermit - vom ersten Schienenfahrzeug aus - Funktionalitäten eines weiteren Schienenfahrzeugs des Fahrzeugsverbands bedient werden, insbesondere dann auch, wenn diese im ersten Schienenfahrzeug nicht vorhanden sind.

Gemäß einer bevorzugten Ausbildung der Erfindung sind die Schienenfahrzeuge miteinander mittels eines Kommunikationsbus auf Ethernet-Basis verbunden, an den das Funktionsgerät angeschlossen ist und über welchen zumindest die Funktionsdaten übertragen werden. Hierzu kann eine schnelle Übertragung der Funktionsdaten mittels gängiger Übertragungsprotokolle für Ethernet basierte Netzwerke erfolgen. Beispielsweise ist die Verwendung des einfachen FTP-Protokolls ("File Transfer Protocol") denkbar. Ein Kommunikationsbus auf Ethernet-Basis eignet sich insbesondere für eine Übertragung von Funktionsdaten, die in der Form von XML-Dateien hinterlegt sind.

In diesem Zusammenhang wird vorgeschlagen, dass die Funktionsdaten und die dynamischen Daten an das Funktionsgerät über den Kommunikationsbus übertragen werden. Hierbei kann die Übertragung der dynamischen Daten gemäß dem UDP-Protokoll ("User Data Protocol") erfolgen, welches sich insbesondere für eine Anwendung mit einem Ethernet-basierten Netzwerk eignet.

Es kann die Auslastung der Fahrzeugsleittechnik der Schienenfahrzeuge dadurch optimiert werden, dass ein Datenverkehr zum Funktionsgerät und ein vom Funktionsgerät stammender Datenverkehr über unterschiedliche Busse erfolgen.

Insbesondere erfolgt der vom Funktionsgerät stammende Datenverkehr über einen weiteren, fahrzeuginternen Bus, welcher insbesondere gemäß dem Stand der Technik ausgebildet ist, wie z.B. in der Form eines MVB-Busses ("Multifunction Vehicle Bus"). Die standardgemäß vorhandenen Datenbusse, wie MVB-Busse und WTB-Busse ("Wire Train Bus") können durch einen Datenverkehr der Funktionsdaten und der dynamischen Daten über den Ethernet-basierten Kommunikationsbus vorteilhaft entlastet werden. Ferner kann eine Projektierung dieser Busse in Bezug auf den Betrieb des Funktionsgeräts vorteilhaft entfallen.

In einer alternativen Ausführung ist denkbar, dass ein Kommunikationsbus auf Ethernet-Basis lediglich als fahrzeuginterner Bus ausgebildet ist, über welchen zumindest die Funktionsdaten übertragen werden. Die Übertragung der Funktionsdaten zwischen den Schienenfahrzeugen kann dann über einen bestehenden Bus erfolgen, wie z.B. einen WTB-Bus. In einer weiteren, alternativen Ausführung ist ebenfalls denkbar, dass für die Übertragung der Funktionsdaten lediglich vorhandene Busse, wie MVB-Busse innerhalb der Schienenfahrzeuge und einen WTB-Bus zwischen den Schienenfahrzeugen, verwendet werden. Zwar kann eine erhöhte Auslastung dieser Busse entstehen, jedoch kann auf das Verlegen eines zusätzlichen Busses verzichtet werden.

Ferner wird ein Schienenfahrzeugsverband bestehend aus zumindest zwei, jeweils als Triebzug ausgebildeten Schienenfahrzeugen, mit zumindest einem in einem ersten Schienenfahrzeug angeordneten Funktionsgerät vorgeschlagen, wobei in jedem Schienenfahrzeug jeweils eine Speichereinheit vorgesehen ist, in welcher zumindest ein Satz von Funktionsdaten zum Betreiben des Funktionsgeräts gespeichert ist, die jeweils für die konstruktive und/oder funktionale Konfiguration des entsprechenden Schienenfahrzeugs spezifisch sind, die Schienenfahrzeuge mittels eines Kommunikationsbus miteinander verbunden sind und das Funktionsgerät dazu vorgesehen ist, zumindest den in einem weiteren Schienenfahrzeug des Fahrzeugverbands gespeicherten Satz von Funktionsdaten aus dem weiteren Schienenfahrzeug zu laden und auf der Basis des geladenen Satzes von Funktionsdaten betrieben zu werden. Zu den vorteilhaften Wirkungen des vorgeschlagenen Fahrzeugsverbands wird - um unnötige Wiederholungen zu vermeiden - auf die obigen Ausführungen bezüglich des Verfahrens verwiesen.

Es wird ein Ausführungsbeispiel der Erfindung anhand der Zeichnungen näher erläutert. Es zeigen:
- Figur 1:: einen Fahrzeugsverband aus zwei miteinander gekoppelten Schienenfahrzeugen und eine interne Netzwerkstruktur,
- Figur 2:: eine Anzeigevorrichtung eines an die Netzwerkstruktur angeschlossenen Funktionsgeräts des im Fahrzeugsverband führenden Schienenfahrzeugs,
- Figur 3:: einen Datenverkehr zwischen einer zentralen Steuereinheit des im Fahrzeugsverband führenden Schienenfahrzeugs und dem Funktionsgerät und
- Figur 4:: einen Datenverkehr zwischen einer zentralen Steuereinheit des im Fahrzeugsverband geführten Schienenfahrzeugs und dem Funktionsgerät.

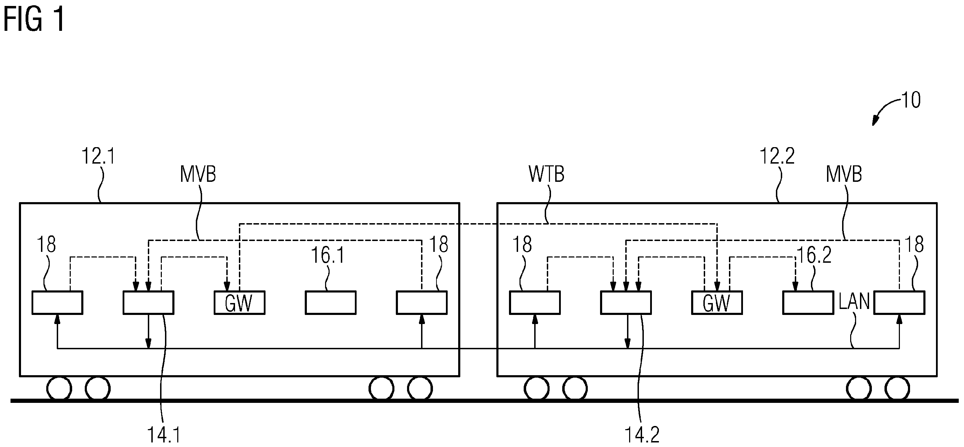

Figur 1 zeigt in einer stark schematisierten Seitenansicht einen Fahrzeugsverband 10, welcher aus zwei miteinander gekuppelten Schienenfahrzeugen 12.1, 12.2 besteht, die als Triebzüge ausgebildet sind. Die Schienenfahrzeuge 12 können aus mehreren Wagen bestehen. Die Kupplung erfolgt vorzugsweise mittels nicht näher gezeigter, korrespondierender Bugkupplungseinheiten, die am Kopf bzw. Ende der Schienenfahrzeuge 12 angeordnet sind und zur automatischen Herstellung einer mechanischen Kupplung zwischen beiden Schienenfahrzeugen 12 dient. Die gezeigte zweiteilige Ausführung des Fahrzeugsverbands 10 ist exemplarisch, wobei sich das unten beschriebene Verfahren ebenfalls für Fahrzeugsverbände eignet, die aus drei oder mehr Schienenfahrzeugen 12 bestehen.

Im Text wird zwischen entsprechenden Einheiten der Schienenfahrzeuge 12.1, 12.2 unterschieden, indem dem Bezugszeichen den Zusatz "1" bzw. "2" hinzugefügt wird. Es wird auf diesen Zusatz verzichtet, wenn eine Angabe allgemein für beide Einheiten gilt.

Jedes Schienenfahrzeug 12 weist ein Paar von zentralen Steuereinheiten 14, 16 auf, die zur Steuerung von Prozessen im jeweiligen Schienenfahrzeug 12 während des Betriebs des Fahrzeugsverbands 10 vorgesehen sind. Für die zentralen Steuereinheiten 14, 16 wird auch der fachmännische Begriff "zentrales Steuergerät" (oder "ZSG") verwendet. In diesem Paar von Steuereinheiten 14, 16 ist ein Teil als Master und das andere als Slave konfiguriert. Im betrachteten Ausführungsbeispiel ist die Steuereinheit 14 als Master ausgebildet. Mit den Steuereinheiten 14, 16 sind Funktionsgeräte 18 über Steuerleitungen verbunden. Die Funktionsgeräte 18 können als Endgeräte oder selbst als Steuereinheiten zur Steuerung von Untersystemen des jeweiligen Schienenfahrzeugs 12 ausgebildet sein.

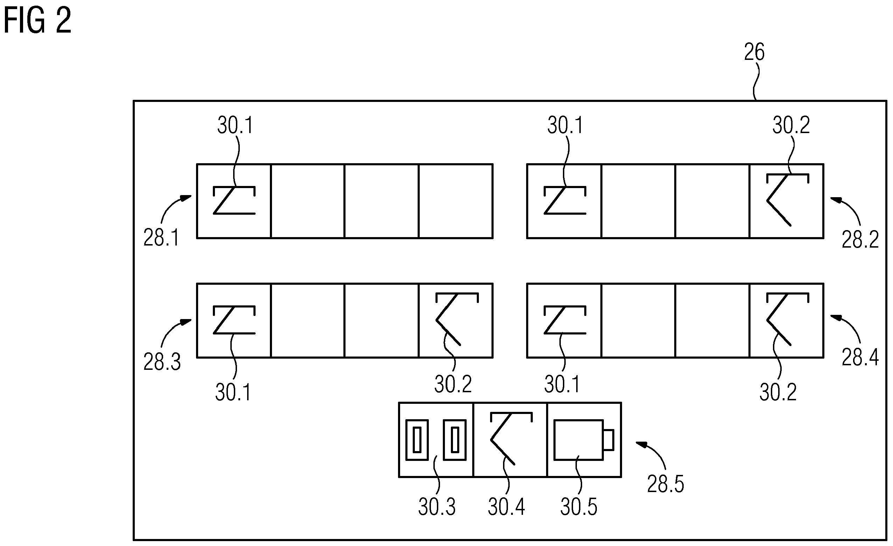

Im Ausführungsbeispiel wird als Funktionsgerät 18 eine Mensch-Maschine-Kommunikationsvorrichtung betrachtet, die zumindest eine in Figur 2 gezeigte Anzeigevorrichtung 22 zur Ausgabe von Informationen an einen Triebfahrzeugführer aufweist. Diese Informationen entsprechen insbesondere Statusund/oder Diagnoseinformationen, die auf weitere Komponenten des Fahrzeugsverbands 10 bezogen sind. Beispielsweise kann der Triebfahrzeugführer darüber informiert werden, dass eine Komponente einwandfrei funktioniert, gestört ist, ausfällt, einer bestimmten Handlung bedarf, ein- oder ausgeschaltet werden muss oder dass eine Wartung der Komponente fällig ist. Für das Funktionsgerät 18 wird auch der fachmännische Begriff "BuD-Terminal" (oder "Betriebs- und Diagnoseterminal") verwendet. Jedes Schienenfahrzeug 12 weist zwei solche Funktionsgeräte 18, die jeweils in einem Führerraum an den entgegengesetzten Enden des Schienenfahrzeugs 12 angeordnet sind.

Die zentralen Steuereinheiten 14, 16 in allen Schienenfahrzeugen 12 des Fahrzeugsverbands 10 wirken derart zusammen, dass der Fahrzeugsverband 10 von einem besetzten Führerraum aus als eine Zugeinheit betrieben werden kann. Neben einer einwandfreien mechanischen Kupplung über die Bugkupplungseinheiten müssen Anforderungen an den Steuersystemen in allen Schienenfahrzeugen 12 des Fahrzeugsverbands 10 erfüllt sein, bevor die Zugeinheit als ordnungsgemäß gebildet gilt. Diese Anforderungen können generisch als "Verbandskonfiguration" bezeichnet werden, die vor dem Betreiben des Fahrzeugsverbands 10 als Zugeinheit eingestellt werden muss. Nach der mechanischen Kupplung erfolgen demnach in den Schienenfahrzeugen 12 Einstellvorgänge, mittels welcher die oben genannten Anforderungen der Verbandskonfiguration erfüllt werden können. Für den mit diesen Einstellungen verbundenen Vorgang wird auch der fachmännische Begriff "Zugtaufe" verwendet. Erst nach erfolgter Zugtaufe kann der Fahrzeugsverband 10 als Zugeinheit betrieben werden.

Das unten beschriebene Verfahren betrifft insbesondere die Inbetriebnahme des Funktionsgeräts 18 bei der Zugtaufe des Fahrzeugsverbands 10.

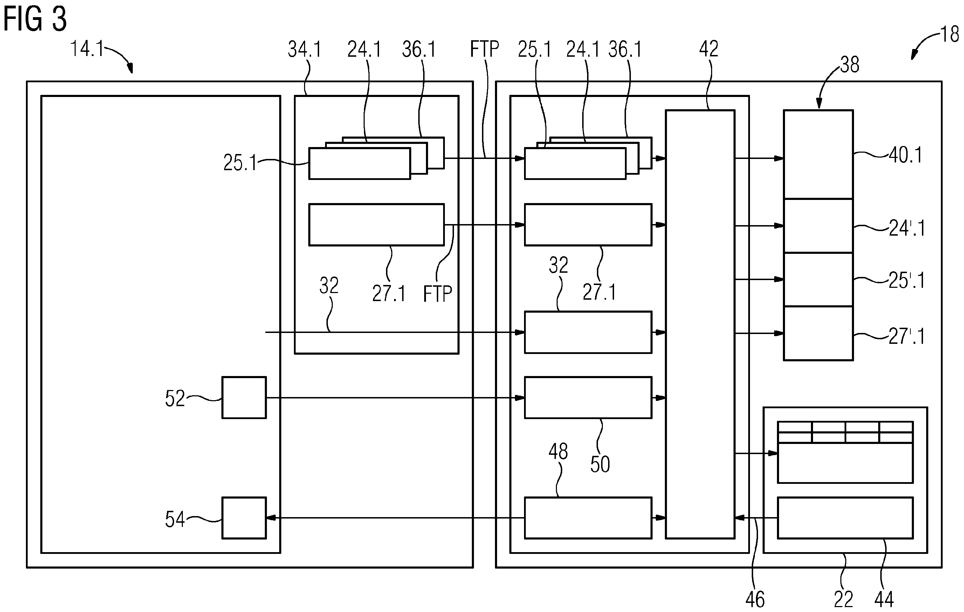

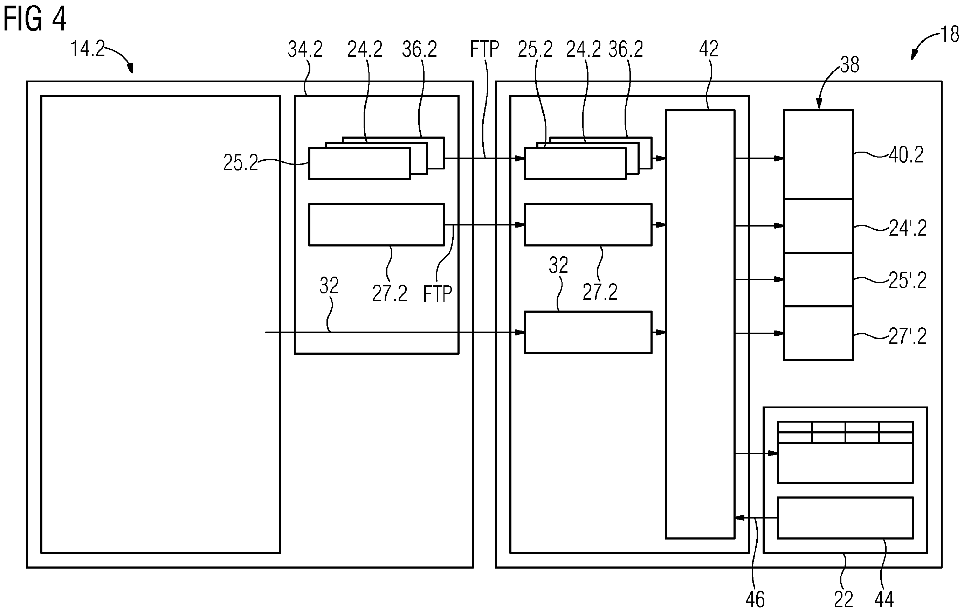

Das Funktionsgerät 18 wird nach erfolgter Zugtaufe, d.h. während des Betriebs des Fahrzeugsverbands 10, auf der Basis von Sätzen 24, 25 und 27 von Funktionsdaten betrieben (siehe Figuren 3 und 4). Die Funktionsdaten 24 dienen zur Bildung von statischen Applikationselementen 26, 28, 30, die als Anzeigeelemente ausgebildet sind und dem Funktionsgerät 18 für die Ausführung einer Anzeigeapplikation zur Verfügung stehen. Beispiele solcher Applikationselemente sind in Figur 2 gezeigt. Ein Applikationselement 26 entspricht einem Hauptfenster - auch "Form" genannt - in welchem Anzeigefenster - auch "Frames" genannt - platziert sind. Zur Erläuterung des in Figur 2 dargestellten und mittels des Funktionsgeräts 18 angezeigten Bilds wird angenommen, dass der Fahrzeugsverband 10 aus vier Schienenfahrzeugen 12.1 bis 12.4 besteht. Das angezeigte Bild enthält insbesondere vier Applikationselemente 28.1 bis 28.4 in der Form von Frames, die jeweils einem der unterschiedlichen Schienenfahrzeuge 12 zugeordnet sind. In jedem Frame ist eine schematische Abbildung des zugeordneten Schienenfahrzeugs 12 zu sehen, wobei die einzelnen Wagen ebenfalls dargestellt sind. Es ist ein weiteres Applikationselement 28.5 in der Form eines Frames vorgesehen, durch welches der Bediener eine bestimmte, zu prüfende Funktion auswählen kann. Im betrachteten Ausführungsbeispiel wurde die Funktion "Stromabnehmer" ausgewählt, wobei in jedem der schienenfahrzeugbezogenen Frames bzw. Applikationselemente 28.1 bis 28.4 der jeweilige Status der zugeordneten Stromabnehmer angezeigt wird. Der Status wird mittels Applikationselementen 30.1 und 30.2 in der Form von unterschiedlichen Bildsymbolen angezeigt. Die Prüfung weiterer Funktionen, wie z.B. Öffnungs- und Schließvorgang von Türen oder Ladezustand der Bordbatterie, ist selbstverständlich möglich, wobei die verschiedenen Funktionen mittels Applikationselementen 30.3, 30.4 und 30.5 in der Form von Bildsymbolen angezeigt werden.

Bei der Ausführung der Anzeigeapplikation werden dem Funktionsgerät 18 während des Betriebs des Fahrzeugverbands 10 regelmäßig dynamische Daten 32 übermittelt, die Informationen über den Status von Fahrzeugskomponenten enthalten. Die Anzeige mittels der Anzeigevorrichtung 22 kommt durch ein Zusammenwirken der statischen Applikationselementen 26, 28, 30 mit den dynamischen Daten 32 zustande. Im betrachteten Beispiel der Figur 2 werden dem Funktionsgerät 18 dynamische Daten 32 mit Informationen betreffend den Betriebszustand der Stromabnehmer übermittelt. Es besteht eine Verknüpfung der dynamischen Daten mit bestimmten Applikationselementen 30 bzw. den Bildsymbolen, wobei beim Vorliegen einer durch die dynamischen Daten 32 übermittelten Information ein zugeordnetes Applikationselement 30.1 oder 30.2, welches einen aktiven bzw. inaktiven Stromabnehmer darstellt, eingeblendet wird. In einem weiteren Beispiel kann auf der Basis von dynamischen Daten 32, die z.B. die Information "Zweite Tür hinten links im 1. geführten Schienenfahrzeug gestört" enthalten, ein Applikationselement 30, nämlich das Bildsymbol einer Fahrzeugstür, rot angezeigt werden. Ferner können weitere dynamische Daten 32 das Öffnen eines Applikationselements 28 bewirken, indem ein Fenster mit einem Informationstext eingeblendet wird. Die Verknüpfung zwischen den dynamischen Daten 32 und bestimmten ausführbaren Routinen bzw. Handlungen wird weiter unten erläutert.

Eine Netzwerkstruktur des Fahrzeugsverbands 10 ist in Figur 1 dargestellt. Es wird zwischen fahrzeuginternen und verbandweiten Bussen unterschieden. Innerhalb eines Schienenfahrzeugs 12 des Fahrzeugsverbands 10 sind die Funktionsgeräte 18 und die zentralen Steuereinheiten 14, 16 über einen Bus MVB miteinander vernetzt. Dieser Bus MVB, der in der Figur gestrichelt dargestellt ist, entspricht einem "Multifunction Vehicle Bus". Dieses Feldbus, welches zum Übertragen von Befehlen innerhalb eines Schienenfahrzeugs dient, ist aus dem Stand der Technik bekannt und wird hier nicht näher erläutert. Die fahrzeuginternen Busse MVB der Schienenfahrzeuge 12 sind ferner über einen weiteren Bus WTB miteinander verbunden. Dieser Bus, welcher strich-punktiert dargestellt ist, ist als Feldbus ausgebildet, der zusammen mit den Bussen MVB der Schienenfahrzeuge 12 ein verbandweites Kommunikationsnetzwerk bildet. Es entspricht einem aus dem Stand der Technik bekannten "Wire Train Bus", welcher hier nicht näher erläutert wird. Die Verbindung über den Bus WTB erfolgt in jedem Schienenfahrzeug 12 über eine Schnittstelleneinheit GW, die mit den lokalen Steuereinheiten 14, 16 und den lokalen Funktionsgeräten 18 mittels des Busses MVB vernetzt ist. Es ist ferner ein weiterer verbandweiter Kommunikationsbus LAN vorgesehen, an welchen die Steuereinheiten 14, 16 und die Funktionsgeräte 18 angeschlossen sind. Der Kommunikationsbus, welcher mittels einer durchgestrichenen Linie dargestellt ist, ist auf Ethernet-Basis ausgebildet.

Die Inbetriebnahme des Funktionsgeräts 18 wird nun anhand der Figuren 1, 3 und 4 näher erläutert. Es wird hierbei angenommen, dass der in Figur 1 links angeordnete Führerraum besetzt ist. Das Schienenfahrzeug 12.1 entspricht demnach dem führenden Schienenfahrzeug des Fahrzeugsverbands 10. Das weitere Schienenfahrzeug 12.2 wird als geführtes Schienenfahrzeug bezeichnet. Die Beschreibung unten beschränkt sich auf die Inbetriebnahme des Funktionsgeräts 18 im besetzten Führerraum, sie gilt jedoch für alle Funktionsgeräte 18 der gleichen Art im gesamten Fahrzeugsverband 10.

Die für den Betrieb des Funktionsgeräts 18 notwendigen Funktionsdaten sind in jedem Schienenfahrzeug 12 in einer Speichereinheit hinterlegt. Insbesondere sind die Sätze 24.1, 25.1 und 27.1 von Funktionsdaten des führenden Schienenfahrzeugs 12.1 in einer Speichereinheit 34.1 der Steuereinheit 14.1 (auch "Master-ZSG" genannt) im führenden Schienenfahrzeug 12.1 gespeichert (Figur 3). Im geführten Schienenfahrzeug 12.2 sind Sätze 24.2, 25.2 und 27.2 von Funktionsdaten in einer Speichereinheit 34.2 der Steuereinheit 14.2 gespeichert (Figur 4).

Die Sätze 24.1, 25.1, 27.1 und 24.2, 25.2, 27.2 sind fahrzeugspezifisch, d.h. sie hängen von der konstruktiven und/oder funktionalen Konfiguration des jeweiligen Schienenfahrzeugs 12 ab. In der betrachteten Ausführung wird davon ausgegangen, dass die Schienenfahrzeuge 12.1, 12.2 zwar miteinander kompatibel sind, jedoch in Bezug auf deren Herstellung einen unterschiedlichen Zeitrang haben. Es wird angenommen, dass das geführte Schienenfahrzeug 12.2 einen jüngeren Zeitrang als das führende Schienenfahrzeug 12.1 hat. Das geführte Schienenfahrzeug 12.2 unterscheidet sich konstruktiv und/oder funktional vom führenden Schienenfahrzeug 12.1 dadurch, dass es über Funktionsgeräte verfügt, die im führenden Schienenfahrzeug 12.1 nicht vorhanden sind und/oder dass bestimmte Funktionsgeräte über Funktionalitäten verfügen, die in entsprechenden Funktionsgeräten des führenden Schienenfahrzeug 12.1 nicht vorhanden sind. Beispielsweise können die Schienenfahrzeuge 12.1 und 12.2 eine unterschiedliche Anzahl von Wagen aufweisen und/oder sie können über unterschiedliche Klimaaggregate verfügen. Die Sätze 24.1 und 24.2 in den verschiedenen Schienenfahrzeugen 12.1 und 12.2 unterscheiden sich daher voneinander, da sie auf der Basis einer unterschiedlichen Schienenfahrzeugskonfiguration erstellt wurden. Dies gilt auch für die Sätze 25 und 27. Für das Erstellen solcher konfigurationsspezifischen Funktionsdaten wird auch der fachmännische Begriff "Projektierung" verwendet. Die Sätze 24, 25, 27 von Funktionsdaten werden vor der ersten Inbetriebnahme eines Schienenfahrzeugs 12 projektiert und in die Speichereinheit 34 hinterlegt. Sie können regelmäßig, zwischen Betriebseinsätzen des Schienenfahrzeugs 12 aktualisiert werden. Eine Änderung von Projektierungsdaten erfolgt während eines Betriebseinsatzes des Schienenfahrzeugs 12 nicht. In der Speichereinheit 34 ist außerdem eine Datei 36 hinterlegt, die Angaben über die Version der in der Speichereinheit 34 zur Verfügung stehenden Sätze 24, 25, 27 von Funktionsdaten enthält.

Bei der Inbetriebnahme des Funktionsgeräts 18 in Verbindung mit der Zugtaufe des Fahrzeugsverbands 10 als Zugeinheit wird in einem ersten Schritt eine Meldung - auch Telegramm genannt - von allen Steuereinheiten 14 des Fahrzeugsverbands 10 an das Funktionsgerät 18 übermittelt. Diese Meldung enthält u.a. Informationen über die Anzahl der den Fahrzeugsverband 10 bildenden Schienenfahrzeuge 12. Im betrachteten Beispiel erhält das Funktionsgerät 18 die Information, dass der Fahrzeugsverband von 2 Schienenfahrzeugen 12 gebildet ist.

In einem weiteren Schritt lädt das Funktionsgerät 18 die Konfigurationsdatei 36.1 aus der Speichereinheit 34.1 des führenden Schienenfahrzeugs 12.1. Das Funktionsgerät 18 vergleicht diese Konfigurationsdatei 36.1 mit einer in einer Speichereinheit 38 des Funktionsgeräts 18 gespeicherten Konfigurationsdatei 40.1. Liegt eine Übereinstimmung vor, wird das Funktionsgerät 18 auf der Basis von Sätzen 24'.1, 25'.1, 27'.1 von Funktionsdaten betrieben, die bei einer früheren Inbetriebnahme geladen wurden und in der Speichereinheit 38 bereits hinterlegt sind.

Sollte keine Übereinstimmung vorliegen, werden die Sätze 24.1, 25.1, 27.1 aus der Speichereinheit 34.1 der Steuereinheit 14.1 vom Funktionsgerät 18 geladen und in die lokale Speichereinheit 38 hinterlegt. Der Ladevorgang wird mittels einer nicht näher dargestellten Ladeeinheit eingeleitet und gesteuert. Das Funktionsgerät 18 wird dann auf der Basis dieser neuen Sätze 24.1, 25.1, 27.1 von Funktionsdaten betrieben.

Die oben genannten Applikationselemente werden dann auf der Basis des Satzes 24.1 - ggf. des Satzes 24'.1 - von Funktionsdaten mittels einer Recheneinheit 42 des Funktionsgeräts 18 gebildet. Aus diesen Funktionsdaten werden insbesondere Bilddateien und Textdateien erzeugt, die dann vom Betriebssystem des Funktionsgeräts 18 zur Ausführung der Anzeigeapplikation eingebunden werden können. Die Behandlung der Sätze 25.1 und 27.1 von Funktionsdaten wird weiter unten beschrieben.

Bezug nehmend auf das beispielhafte Bild in Figur 2 und insbesondere auf die Applikationselemente 26, 28, 30 ist im Funktionsgerät 18 eine Applikationsstruktur vorhanden, die von abstrakten Objekten bzw. abstrakten Formen, Frames und Bildern gebildet ist, wobei diese Objekte auf der Basis der Funktionsdaten des Satzes 24.1 bzw. 24'.1 der verschiedenen Schienenfahrzeuge 12 des Fahrzeugsverbands 10 instanziiert werden. Das Positionieren bzw. Einblenden von Statusanzeigen erfolgt auf der Basis der fahrzeugsspezifischen Funktionsdaten, die in die abstrakte Applikationsstruktur des Funktionsgeräts 18 eingebunden werden, und wird vorteilhaft nicht durch eine feste Applikationsstruktur im Funktionsgerät 18 vorgegeben. Eine solche feste Applikationsstruktur muss alle möglichen Zugverbandkonfigurationen berücksichtigen und erfordert demnach einen hohen Projektierungsaufwand.

Der oben beschriebene Vorgang wird für das geführte Schienenfahrzeug 12.2 wiederholt. Soll der Fahrzeugsverband 10 aus mehr als zwei Schienenfahrzeugen 12 bestehen, wird der Vorgang für jedes Schienenfahrzeug 12 wiederholt. Zur Erläuterung wird die Figur 4 herangezogen, in welcher der Datenverkehr zwischen der Steuereinheit 14.2 und dem Funktionsgerät 18 dargestellt ist.

Es werden zunächst die Versionen der Sätze der Funktionsdaten im Funktionsgerät 18 und in der Speichereinheit 34.2 im geführten Schienenfahrzeug 12.2 mittels der Konfigurationsdateien 36.1 und 40.2 verglichen. Bei fehlender Übereinstimmung werden die Sätze 24.2, 25.2, 27.2 vom Funktionsgerät 18 des führenden Schienenfahrzeugs 12.1 aus der lokalen Speichereinheit 34.2 im geführten Schienenfahrzeug 12.2 geladen.

Es werden anschließend auch aus diesen, dem geführten Schienenfahrzeug 12.2 zugeordneten Funktionsdaten Applikationselemente für die Ausführung der Anzeigeapplikation der Anzeigevorrichtung 22 erzeugt. Wie oben beschrieben verfügt das geführte Schienenfahrzeug 12.2 über Funktionalitäten, die im führenden Schienenfahrzeug 12.1 nicht vorhanden sind. Mit der Übermittlung der Funktionsdaten aus dem geführten Schienenfahrzeug 12.2 ist das Funktionsgerät 18 in der Lage, Informationen auszugeben, die diesen Funktionalitäten des geführten Schienenfahrzeugs 12.2 zugeordnet sind. Diese Möglichkeit ist gegeben, ohne dass eine erneute Projektierung von Daten im älteren Schienenfahrzeug 12.1 erfolgen muss.

Nach erfolgter Inbetriebnahme des Funktionsgeräts 18 werden, wie oben bereits beschrieben, regelmäßig Meldungen mit dynamischen Daten 32 ans Funktionsgerät 18 übermittelt. Diese werden aktiv von den Steuereinheiten 14.1, 14.2 erzeugt und übermittelt, auf der Basis von Meldungen, die von einer bestimmten Funktionskomponente an die jeweilige Steuereinheit 14 über den lokalen Bus MVB übermittelt wurden. Die die dynamischen Daten 32 enthaltenden Meldungen von den Steuereinheiten 14.1, 14.2 erfolgen über den Kommunikationsbus LAN. In der betrachteten Ausführung erfolgen die Meldungen mit den dynamischen Daten 32 gemäß dem Netzwerkprotokoll UDP (User Data Protocol).

Die Ladung der Sätze 24, 25, 27 von Funktionsdaten erfolgt ebenfalls über den Kommunikationsbus LAN. Die Funktionsdaten sind in den Speichereinheiten 34 der jeweiligen Schienenfahrzeuge 12 in einer Textform hinterlegt, die unabhängig vom benutzten Betriebssystem des Funktionsgeräts 18 ist. Insbesondere sind die Funktionsdaten im XML-Format hinterlegt (eXtensible Markup Language) und sie werden in dieser Form vom Funktionsgerät 18 geladen, insbesondere mittels des FTP-Protokolls, wie in Figur 3 und 4 dargestellt. Die Behandlung der XML-Dateien erfolgt mittels der Recheneinheit 42, die aus diesen die oben genannten Applikationselemente erzeugen kann (auch "XML Parser" genannt). Ein Satz von Funktionsdaten kann in diesem Zusammenhang eine XML-Datei sein oder ein Bündel von mehreren XML-Dateien sein, die thematisch miteinander verbunden sind.

Wie oben beschrieben kommt die Anzeige von Informationen durch ein Zusammenwirken von statischen Applikationselementen 26, 28, 30 auf der Basis der Funktionsdaten mit den dynamischen Daten 32 zustande. Der Satz 25 von Funktionsdaten enthält Anweisungen, die die Herstellung einer Verknüpfung zwischen bestimmten dynamischen Daten 32 und zumindest einer Handlung mit einem Applikationselement, die für diese dynamischen Daten 32 auszuführen ist. In Bezug auf die Anzeigeapplikation kann die Handlung z.B. ein Einblenden oder Ausblenden eines bestimmten Bildsymbols, ein Anzeigen eines Bildsymbols in einer bestimmten Farbe, das zur Verfügung Stellen einer Textinformation, die eingeblendet werden kann usw. Auf der Basis des Satzes 25 von Funktionsdaten werden mittels der Recheneinheit 42 Ablaufcodes für Routinen erstellt, die jeweils für bestimmte Arten von dynamischen Daten auszuführen sind. Diese Funktionsdaten sind auch "Verknüpfungsanweisungen" genannt.

Das Funktionsgerät 18 weist außerdem eine Eingabeeinrichtung 44 auf, mittels welcher der Triebfahrzeugsführer Steuerbefehle 46 eingeben kann. Die Eingabeeinrichtung 44 kann insbesondere mit der Anzeigevorrichtung 22 in der Form eines Touch-Displays kombiniert sein. Die Übermittlung dieser Steuerbefehle 46 vom Funktionsgerät 18 zur lokalen Steuereinheit 14.1 erfolgt über den lokalen Bus MVB, und zwar über eine MVB-Sendeeinheit 48 des Funktionsgeräts 18 und eine MVB-Empfangseinheit 54 der Steuereinheit 14.1. Die Steuerbefehle werden dann von der Steuereinheit 14.1 an eine Zielkomponente im führenden Schienenfahrzeug 12.1 oder - über den Bus WTB - an eine Zielkomponente im geführten Schienenfahrzeug 12.2. Die Fernsteuerung der Zielkomponente im führenden Schienenfahrzeug 12.1 oder im geführten Schienenfahrzeug 12.2 erfolgt insbesondere mittels einer ausführbaren Routine des Funktionsgeräts 18. Diese Routine wird auf der Basis des Satzes 27 von Funktionsdaten wie oben für die weiteren Sätze 24 und 25 beschrieben gebildet. Da das Funktionsgerät 18 insbesondere über einen Satz 27.2 von Funktionsdaten verfügen kann, die für das geführte Schienenfahrzeug 12.2 spezifisch sind, können über die Eingabeeinrichtung 44 Funktionalitäten des geführten Schienenfahrzeugs 12.2 bedient werden, welche im führenden Schienenfahrzeug 12.1 nicht vorhanden bzw. anderweitig ausgestaltet sind.

Das Funktionsgerät 18 als Funktionskomponente des Schienenfahrzeugs 12.1 ist ferner mit der Steuereinheit 14.1 über den Bus MVB vernetzt und weist eine MVB-Empfangseinheit 50 auf, über welche es Meldungen erhält, die von einer MVB-Sendeeinheit 52 der Steuereinheit 14 erzeugt werden.

## Patentansprüche

1. Verfahren zur Inbetriebnahme zumindest eines Funktionsgeräts (18) in einem ersten Schienenfahrzeug (12.1) eines aus mehreren, jeweils als Triebzug ausgebildeten Schienenfahrzeugen (12.1, 12.2) bestehenden Fahrzeugsverbands (10), wobei das Funktionsgerät (18) auf der Basis wenigstens eines Satzes (24.1, 24.2, 25.1, 25.2, 27.1, 27.2) von Funktionsdaten betreibbar ist, bei welchem
- in jedem Schienenfahrzeug (12.1; 12.2) jeweils zumindest ein Satz (24.1, 25.1, 27.1; 24.2, 25.2, 27.2) von Funktionsdaten zum Betreiben des Funktionsgeräts (18) gespeichert ist, die jeweils für die konstruktive und/oder funktionale Konfiguration des entsprechenden Schienenfahrzeugs (12.1, 12.2) spezifisch sind,
- im ersten Schienenfahrzeug (12.1) zumindest der in einem weiteren Schienenfahrzeug (12.2) des Fahrzeugsverbands (10) gespeicherte Satz (24.2, 25.2, 27.2) aus dem weiteren Schienenfahrzeug (12.2) geladen wird, und
- das Funktionsgerät (18) zumindest auf der Basis des geladenen Satzes (24.2, 25.2, 27.2) von Funktionsdaten betrieben wird.

2. Verfahren nach Anspruch 1,
**dadurch gekennzeichnet, dass**
im ersten Schienenfahrzeug (12.1) vor dem Laden eines gespeicherten Satzes (24.1, 25.1, 27.1; 24.2, 25.2, 27.2) von Funktionsdaten ermittelt wird, ob ein Laden des Satzes (24.1, 25.1, 27.1; 24.2, 25.2, 27.2) erforderlich ist, und das Laden bei vorliegendem Erfordernis erfolgt.

3. Verfahren nach einem der vorhergehenden Ansprüche,
**dadurch gekennzeichnet, dass**
zumindest ein Satz (24.1, 25.1, 27.1; 24.2, 25.2, 27.2) von Funktionsdaten zur Bildung von statischen Applikationselementen (26, 28, 30) dient, die dem Funktionsgerät (18) zur Ausführung einer Applikation zur Verfügung stehen, dass während des Betriebs des Fahrzeugsverbands (10) dynamische Daten (32) dem Funktionsgerät (18) übermittelt werden, und dass die Ausführung der Applikation auf einem Zusammenwirken der statischen Applikationselemente (26, 28, 30) und der dynamischen Daten (32) basiert.

4. Verfahren nach Anspruch 3,
**dadurch gekennzeichnet, dass**
im ersten Schienenfahrzeug (12.1) vor dem Betreiben des Funktionsgeräts (18) die Funktionsdaten zur Erzeugung der Applikationselemente (26, 28, 30) kompiliert werden.

5. Verfahren nach Anspruch 4,
**dadurch gekennzeichnet, dass**
die Funktionsdaten in der Form von Textdateien gespeichert sind und geladen werden.

6. Verfahren nach einem der Ansprüche 3 bis 5,
**dadurch gekennzeichnet, dass**
das Funktionsgerät (18) eine Anzeigevorrichtung (22) aufweist, wobei die Applikationselemente (26, 28, 30) zumindest für einen Betrieb der Anzeigevorrichtung (22) verfügbaren Anzeigeelementen entsprechen und eine dynamische Anzeige auf der Basis der verfügbaren Anzeigeelemente und der dynamischen Daten (32) erfolgt.

7. Verfahren nach einem der Ansprüche 3 bis 6,
**dadurch gekennzeichnet, dass**
zumindest ein Satz (25.1, 25.2) von Funktionsdaten zur Bildung einer Verknüpfung zwischen dynamischen Daten (32), die dem Funktionsgerät (18) übermittelbar sind, und zumindest eine Handlung mit einem Applikationselement (26, 28, 30) dient, welche für diese dynamischen Daten (32) auszuführen ist.

8. Verfahren nach Anspruch 6 und 7,
**dadurch gekennzeichnet, dass**
auf der Basis der Funktionsdaten eine Verknüpfung zwischen dynamischen Daten (32) und einer der folgenden Handlungen herstellbar ist: Einblenden oder Ausblenden eines Bildsymbols, Anzeigen eines Bildsymbols in einer bestimmten Farbe, zur Verfügung Stellen einer einblendbaren Textinformation.

9. Verfahren nach einem der vorhergehenden Ansprüche,
**dadurch gekennzeichnet, dass**
das Funktionsgerät (18) im ersten Schienenfahrzeug (12.1) eine Eingabeeinrichtung (44) zur Eingabe von Steuerbefehlen (46) aufweist, wobei zumindest ein Satz (27.1, 27.2) von Funktionsdaten eines der Schienenfahrzeuge (12.1, 12.2) zur Bildung zumindest einer ausführbaren Routine dient, die dazu vorgesehen ist, auf der Basis eines eingegebenen Steuerbefehls (46) die Ausführung einer Funktion in diesem Schienenfahrzeug (12.1, 12.2) auszulösen.

10. Verfahren nach einem der vorhergehenden Ansprüche,
**dadurch gekennzeichnet, dass**
die Schienenfahrzeuge (12.1, 12.2) miteinander mittels eines Kommunikationsbus (LAN) auf Ethernet-Basis verbunden sind, an den das Funktionsgerät (18) angeschlossen ist und über welchen zumindest die Funktionsdaten übertragen werden.

11. Verfahren nach Anspruch 3 und 10,
**dadurch gekennzeichnet, dass**
die Funktionsdaten und die dynamischen Daten (32) an das Funktionsgerät (18) über den Kommunikationsbus (LAN) übertragen werden.

12. Verfahren nach einem der vorhergehenden Ansprüche,
**dadurch gekennzeichnet, dass**
ein Datenverkehr zum Funktionsgerät (18) und ein vom Funktionsgerät (18) stammender Datenverkehr über unterschiedliche Busse (LAN, MVB) erfolgen.

13. Verfahren nach Anspruch 11 und 12,
**dadurch gekennzeichnet, dass**
der vom Funktionsgerät (18) stammende Datenverkehr über einen weiteren, fahrzeuginternen Bus (MVB) erfolgt.

14. Schienenfahrzeugsverband bestehend aus zumindest zwei, jeweils als Triebzug ausgebildeten Schienenfahrzeugen (12.1, 12.2), mit zumindest einem in einem ersten Schienenfahrzeug (12.1) angeordneten Funktionsgerät (18), wobei in jedem Schienenfahrzeug (12.1; 12.2) jeweils eine Speichereinheit (34.1; 34.2) vorgesehen ist, in welcher zumindest ein Satz (24.1, 25.1, 27.1; 24.2, 25.2, 27.2) von Funktionsdaten zum Betreiben des Funktionsgeräts (18) gespeichert ist, die jeweils für die konstruktive und/oder funktionale Konfiguration des entsprechenden Schienenfahrzeugs (12.1, 12.2) spezifisch sind, die Schienenfahrzeuge (12.1, 12.2) mittels eines Kommunikationsbus (LAN) miteinander verbunden sind und das Funktionsgerät (18) dazu vorgesehen ist, zumindest den in einem weiteren Schienenfahrzeug (12.2) des Fahrzeugsverbands gespeicherten Satz (24.2, 25.2, 27.2) von Funktionsdaten aus dem weiteren Schienenfahrzeug (12.1; 12.2) zu laden und auf der Basis des geladenen Satzes (24.2, 25.2, 27.2) von Funktionsdaten betrieben zu werden.

15. Schienenfahrzeugsverband Anspruch 14,
**dadurch gekennzeichnet, dass**
der Kommunikationsbus (LAN) auf Ethernet-Basis ausgelegt ist.

## Claims

1. Method for starting up at least one functional device (18) in a first rail vehicle (12.1) of a vehicle system (10) consisting of a plurality of rail vehicles (12.1, 12.2) each designed as a tractive unit, wherein the functional device (18) is operable on the basis of at least one set (24.1, 24.2, 25.1, 25.2, 27.1, 27.2) of functional data, in which
- at least one set (24.1, 25.1, 27.1; 24.2, 25.2, 27.2) of functional data for operating the functional device (18) is stored in each case in each rail vehicle (12.1; 12.2), which functional data are in each case specific to the structural and/or functional configuration of the corresponding rail vehicle (12.1, 12.2),
- at least the set (24.2, 25.2, 27.2) which is stored in a further rail vehicle (12.2) of the vehicle system (10) is loaded in the first rail vehicle (12.1) from the further rail vehicle (12.2), and
- the functional device (18) is operated on the basis of the loaded set (24.2, 25.2, 27.2) of functional data.

2. Method according to Claim 1,
**characterized in that**,
in the first vehicle (12.1), before the loading of a stored set (24.1, 25.1, 27.1; 24.2, 25.2, 27.2) of functional data it is determined whether the set (24.1, 25.1, 27.1; 24.2, 25.2, 27.2) needs to be loaded, and the loading is carried out if necessary.

3. Method according to one of the preceding claims,
**characterized in that**
at least one set (24.1, 25.1, 27.1; 24.2, 25.2, 27.2) of functional data serves to form static application elements (26, 28, 30) which are available to the functional device (18) in order to run an application, that dynamic data (32) are transmitted to the functional device (18) during the operation of the vehicle system (10), and that the running of the application is based on an interworking of the static application elements (26, 28, 30) and the dynamic data (32).

4. Method according to Claim 3,
**characterized in that**
the functional data for generating the application elements (26, 28, 30) are compiled in the first rail vehicle (12.1) before the operation of the functional device (18).

5. Method according to Claim 4,
**characterized in that**
the functional data are stored and loaded in the form of text files.

6. Method according to one of Claims 3 to 5,
**characterized in that**
the functional device (18) has a display device (22), wherein the application elements (26, 28, 30) correspond to display elements available at least for an operation of the display device (22) and a dynamic display is effected on the basis of the available display elements and the dynamic data (32).

7. Method according to one of Claims 3 to 6,
**characterized in that**
at least one set (25.1, 25.2) of functional data serves to form a link between dynamic data (32) which are transmitted to the functional device (18) and at least one action with an application element (26, 28, 30) which is to be carried out for these dynamic data (32).

8. Method according to Claims 6 and 7,
**characterized in that**
a link can be established on the basis of the functional data between dynamic data (32) and one of the following actions: showing or hiding an icon, displaying an icon in a specific color, providing showable text information.

9. Method according to one of the preceding claims,
**characterized in that**
the functional device (18) in the first rail vehicle (12.1) has an input device (44) to enter control commands (46), wherein at least one set (27.1, 27.2) of functional data of one of the rail vehicles serves (12.1, 12.2) to form at least one executable routine which is provided to initiate the performance of a function in this rail vehicle (12.1, 12.2) on the basis of an entered control command (46).

10. Method according to one of the preceding claims,
**characterized in that**
the rail vehicles (12.1, 12.2) are interconnected by means of an Ethernet-based communication bus (LAN) to which the functional device (18) is connected and via which at least the functional data are transmitted.

11. Method according to Claims 3 and 10,
**characterized in that**
the functional data and the dynamic data (32) are transmitted to the functional device (18) via the communication bus (LAN).

12. Method according to one of the preceding claims,
**characterized in that**
a data transmission to the functional device (18) and a data transmission from the functional device (18) are implemented via different buses (LAN, MVB).

13. Method according to Claims 11 and 12,
**characterized in that**
the data transmission from the functional device (18) is implemented via a further vehicle-internal bus (MVB).

14. Rail vehicle system consisting of at least two rail vehicles (12.1, 12.2) each designed as a tractive unit, with at least one functional device (18) disposed in a first rail vehicle (12.1), wherein a storage unit (34.1; 34.2) is provided in each case in each rail vehicle (12.1; 12.2) in which at least one set (24.1, 25.1, 27.1; 24.2, 25.2, 27.2) of functional data for operating the functional device (18) is stored, which functional data are in each case specific to the structural and/or functional configuration of the corresponding rail vehicle (12.1, 12.2), the rail vehicles (12.1, 12.2) are interconnected by means of a communication bus (LAN) and the functional device (18) is provided in order to load at least the set (24.2, 25.2, 27.2) of functional data which is stored in a further rail vehicle (12.2) of the vehicle system from the further rail vehicle (12.1; 12.2) and to be operated on the basis of the loaded set (24.2, 25.2, 27.2) of functional data.

15. Rail vehicle system according to Claim 14,
**characterized in that**
the communication bus (LAN) is designed on an Ethernet basis.

## Revendications

1. Procédé de mise en service d'au moins un appareil (18) fonctionnel dans un premier véhicule (12.1) ferroviaire d'une rame (10) de véhicules, consistant en plusieurs véhicules (12.1, 12.2) ferroviaires constitués chacun en rame automotrice, l'appareil (18) fonctionnel pouvant fonctionner sur la base d'au moins un jeu (24.1, 24.2, 25.1, 25.2, 27.1, 27.2) de données fonctionnelles, dans lequel
- dans chaque véhicule (12.1, 12.2) ferroviaire est mémorisé respectivement au moins un jeu (24.1, 25.1, 27.1 ; 24.2, 25.2, 27.2) de données fonctionnelles pour faire fonctionner l'appareil (18) fonctionnel, qui sont spécifiques à la configuration de construction et/ou de fonctionnement du véhicule (12.1, 12.2) fonctionnel correspondant,
- on charge, dans le premier véhicule (12.1) ferroviaire, à partir d'un autre véhicule (12.2) ferroviaire, le jeu (24.2, 25.2, 27.2) mémorisé dans l'autre véhicule (12.2) ferroviaire de la trame (10) de véhicule et
- on fait fonctionner l'appareil (18) fonctionnel au moins sur la base du jeu (24.2, 25.2, 27.2) chargé de données fonctionnelles.

2. Procédé suivant la revendication 1,
**caractérisé en ce que**
on détermine dans le premier véhicule (12.1) ferroviaire, avant le chargement d'un jeu (24.1, 25.1,27.1 ; 24.2, 25.2, 27.2) mémorisé de données fonctionnelles, si un chargement du jeu (24.1, 25.1, 27.1 ; 24.2, 25.2, 27.2) est nécessaire et le chargement s'effectue suivant l'exigence présente.

3. Procédé suivant l'une des revendications précédentes,
**caractérisé en ce qu'**
au moins un jeu (24.1, 25.1, 27.1 ; 24.2, 25.2, 27.2) de données fonctionnelles sert à former des éléments (26, 28, 30) d'application statiques, qui sont à la disposition de l'appareil (18) fonctionnel pour l'exécution d'une application, **en ce que**, pendant le fonctionnement de la rame (10) de véhicules, on transmet des données (32) dynamiques et **en ce que** l'exécution de l'application repose sur une coopération des éléments (26, 28, 30) d'application statiques et des données (32) dynamiques.

4. Procédé suivant la revendication 3,
**caractérisé en ce que**,
dans le premier véhicule (12.1) ferroviaire, on compile, avant le fonctionnement de l'appareil (18) fonctionnel, les données fonctionnelles pour la production des éléments (26, 28, 30) d'application.

5. Procédé suivant la revendication 4,
**caractérisé en ce que**
les données fonctionnelles sont mémorisées sous la forme de fichiers de texte et chargées.

6. Procédé suivant l'une des revendications 3 à 5,
**caractérisé en ce que**
l'appareil (18) fonctionnel a un dispositif (22) d'affichage, les éléments (26, 28, 30) d'application correspondant à des éléments d'affichage disponibles au moins pour un fonctionnement du dispositif (22) d'affichage et un affichage dynamique s'effectuant sur la base des éléments d'affichage disponibles et des données (32) dynamiques.

7. Procédé suivant l'une des revendications 3 à 6,
**caractérisé en ce qu'**
au moins un jeu (25.1, 25.2) de données fonctionnelles sert à la formation d'une combinaison entre des données (32) dynamiques, qui peuvent être transmises à l'appareil (18) fonctionnel, et au moins d'une action avec un élément (26, 28, 30) d'application, qui peut être réalisée pour ces données (32) dynamiques.

8. Procédé suivant les revendications 6 et 7,
**caractérisé en ce que**
sur la base des données fonctionnelles, on peut produire une combinaison des données (32) dynamiques et l'une des actions suivantes : incrustation ou désincrustation d'un symbole d'image, affichage d'un symbole d'image en une couleur déterminée, mise à disposition d'une information de texte incrustable.

9. Procédé suivant l'une des revendications précédentes,
**caractérisé en ce que**
l'appareil (18) fonctionnel, dans le premier véhicule (12.1) ferroviaire, a un dispositif (44) d'entrée pour l'entrée d'instructions (46) de commande, au moins un jeu (27.1, 27.2) de données fonctionnelles de l'un des véhicules (12.1, 12.2) ferroviaires servant à la formation d'au moins une routine réalisable prévue pour, sur la base d'une instruction (46) de commande entrée, déclencher l'exécution d'une fonction dans ce véhicule (12.1, 12.2) ferroviaire.

10. Procédé suivant l'une des revendications précédentes,
**caractérisé en ce que**
les véhicules (12.1, 12.2) ferroviaires sont reliés entre eux au moyen d'un bus (LAN) de communication à base d'Ethernet, auquel l'appareil (18) fonctionnel est raccordé et par lequel au moins les données fonctionnelles sont transmises.

11. Procédé suivant les revendications 3 et 10,
**caractérisé en ce que**
l'on transmet les données fonctionnelles et les données (32) dynamiques à l'appareil (18) fonctionnel par le bus (LAN) de communication.

12. Procédé suivant l'une des revendications précédentes,
**caractérisé en ce qu'**
un échange de données allant à l'appareil (18) fonctionnel et un échange de données provenant de l'appareil (18) fonctionnel, s'effectuent par des bus (LAN, MVB) différents.

13. Procédé suivant les revendications 11 et 12,
**caractérisé en ce que**
l'échange de données provenant de l'appareil (18) fonctionnel s'effectue par un autre bus (MVB) interne au véhicule.

14. Rame de véhicules ferroviaires consistant en au moins deux véhicules (12.1, 12.2) ferroviaires constitués en rame automotrice, comprenant au moins un appareil (18) fonctionnel disposé dans un premier véhicule (12.1) ferroviaire, une unité (34.1, 34.2) de mémorisation, dans laquelle est mémorisé au moins un jeu (24.1, 25.1, 27.1 ; 24.2, 25.2, 27.2) de données fonctionnelles, pour faire fonctionner l'appareil (18) fonctionnel, étant prévue dans chaque véhicule (12.1, 12.2) ferroviaire, données qui sont spécifiques respectivement à la configuration de construction et/ou de fonctionnement des véhicules (12.1, 12.2) ferroviaires correspondant, les véhicules (12.1, 12.2) ferroviaires étant reliés entre eux au moyen d'un bus (LAN) de communication et l'appareil (18) fonctionnel étant prévu pour charger au moins le jeu (24.2, 25.2, 27.2), mémorisé dans un autre véhicule (12.2) ferroviaire de la rame de véhicules, de données fonctionnelles provenant de l'autre véhicule (12.1 ; 12.2) ferroviaire et être mis en fonctionnement sur la base du jeu (24.2 ; 25.2, 27.2) chargé de données fonctionnelles.

15. Rame de véhicules ferroviaires suivant la revendication 14,
**caractérisé en ce que**
le bus (LAN) de communication est conçu sur une base Ethernet.
